# EUROPÄISCHE PATENTSCHRIFT

(11) **EP 1 050 814 B1**
(45) Veröffentlichungstag und Bekanntmachung des Hinweises auf die Patenterteilung: **23.07.2008**
(21) Anmeldenummer: 00107449.1
(22) Anmeldetag: 06.04.2000
(51) Int. Cl.: G06F 11/20, G06F 11/00

(54) **Fehlertolerantes System nach einem byzantinen Algorithmus**
Fault-tolerant system using a byzantine algorithm
Système tolérant de fautes utilisant un algorithme byzantine

(30) Priorität: 07.05.1999 DE 19921179
(43) Veröffentlichungstag der Anmeldung: 08.11.2000
(73) Patentinhaber: Astrium GmbH, 85521 Ottobrunn (DE)
(72) Erfinder: Brinkmann, Volker, Dipl.-Ing., 28844 Weyhe (DE)
(74) Vertreter: Hansmann, Dierk

(56) Entgegenhaltungen:
- DE-A1- 4 401 168
- US-A- 4 907 232

## Beschreibung

Die Erfindung betrifft eine Logikeinheit zum Aufbau eines zeitgleich eine Anzahl F von Fehlern tolerierenden, nach dem byzantinen Algorithmus betreibbaren Verbundes mit mehreren Logikeinheiten mit einer Mehrzahl von Eingängen zum Einlesen von Daten in Register eines Registersatzes und einer Mehrzahl von Ausgängen zum Auslesen von Daten aus den Registern, wobei jeder Ausgang mit einem Eingang einer weiteren Logikeinheit verbindbar ist. Ferner betrifft die Erfindung eine Rechnereinheit mit einer derartigen Logikeinheit sowie einen fehlertoleranten Verbund von wenigstens 3F+1 Logikeinheiten oder Rechnereinheiten. Schließlich betrifft die Erfindung auch ein Verfahren zum Betreiben eines fehlertoleranten Verbundes mit wenigstens 3F+1 derartigen Logikeinheiten oder Rechnereinheiten mit F+1 Datenverteilungszyklen.

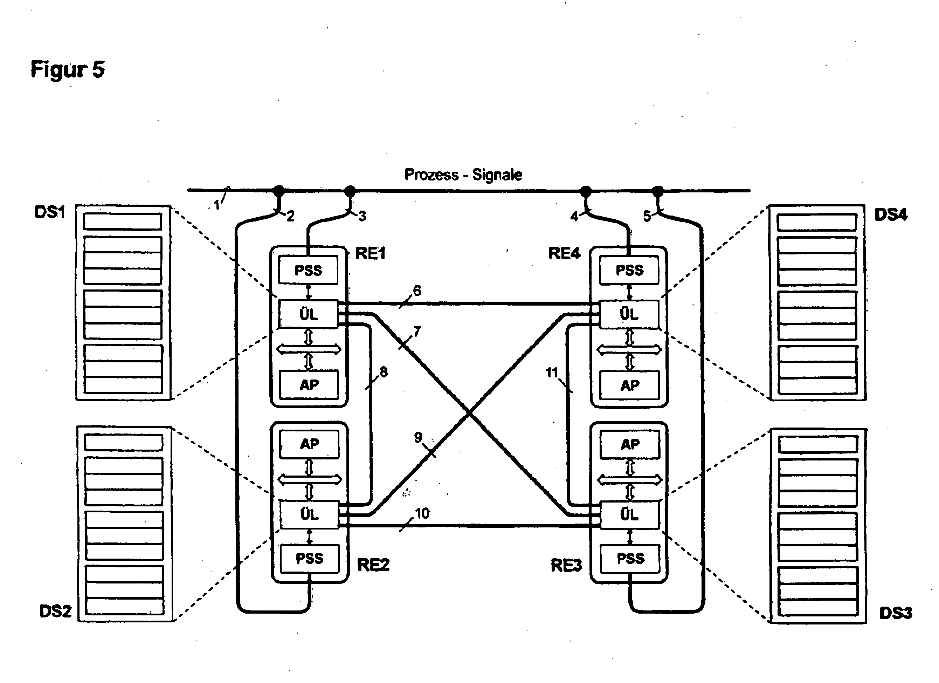

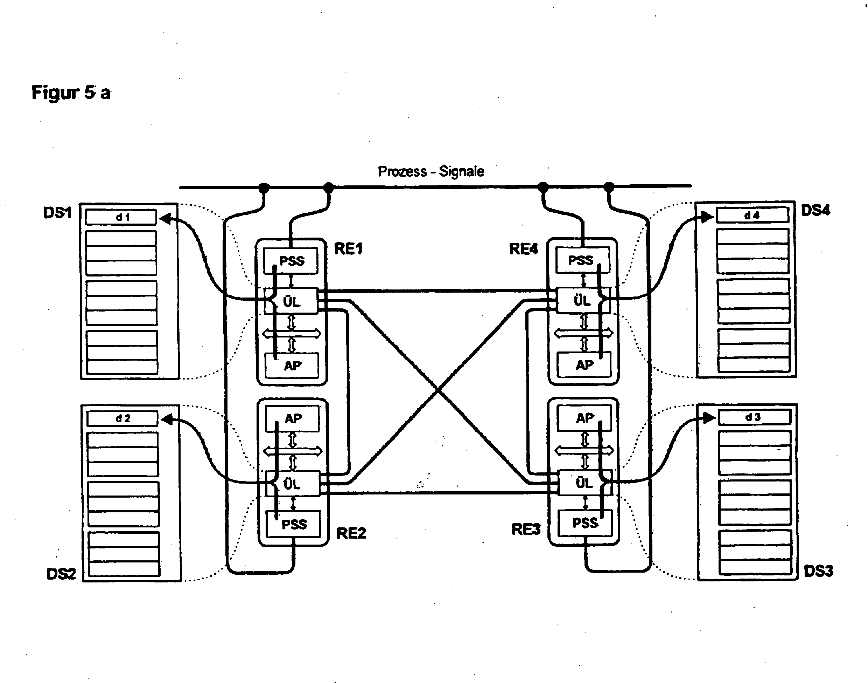

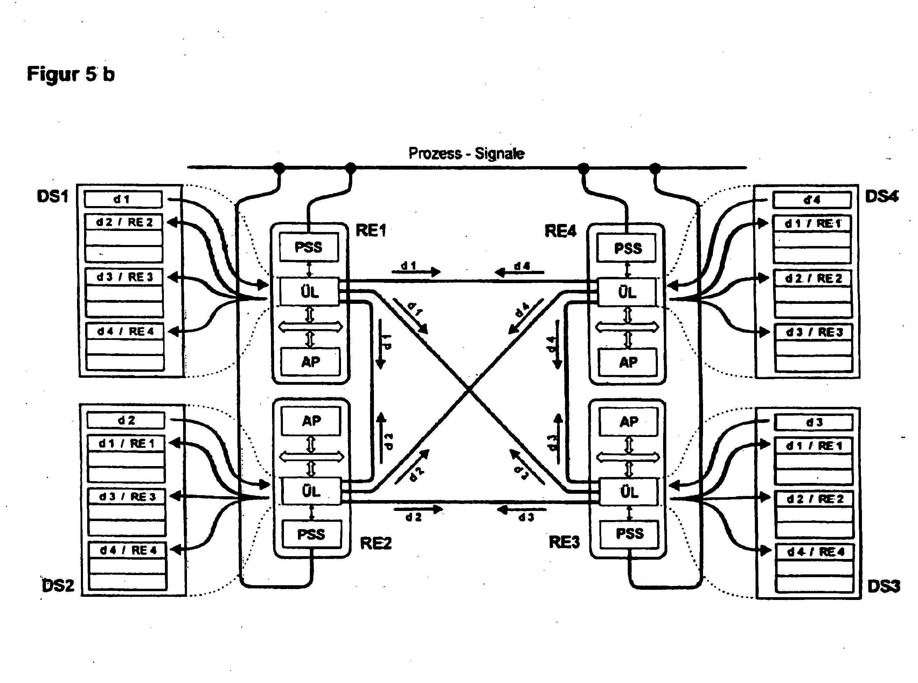

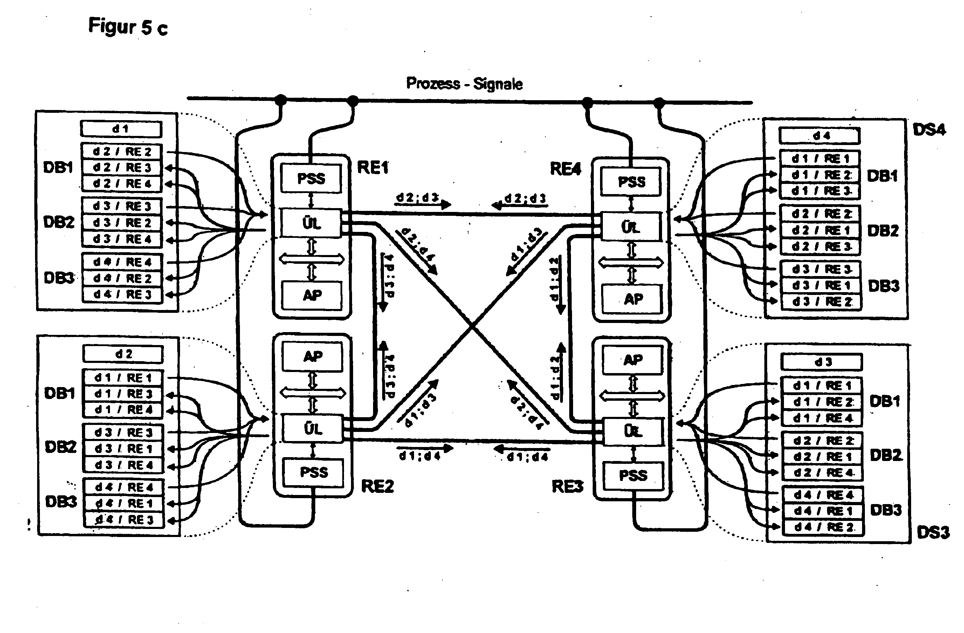

Fehlertolerante Rechner dieser Art sind beispielsweise aus DE 44 01 168 C2 bekannt. Sie arbeiten nach dem byzantinen Algorithmus, wie es sich aus DE 44 01 168 C2 sowie aus Leslie Lamport, Robert E. Schostak, Marshall C. Pease: "The Byzantine Generals Problem", ACM Transaction on Programming Languages and Systems (TOPLAS), Volume 4, Number 3, July 1982, S. 382 -401, ergibt. Der byzantine Algorithmus besteht im wesentlichen aus einer redundanten Datenverarbeitung mit mehreren parallel arbeitenden Rechnereinheiten, die nach diesem Algorithmus Daten in einer nachfolgend näher erläuterten Weise verteilen und vergliechen. Fehlertolerante Rechner dieser Art bestehen aus einem Verbund von 3F+1 Rechnereinheiten RE1 bis RE(3F+1). Derartige Rechnereinheiten sind z.B. für F=1 gemäß Figur 5 in der Weise miteinander verbunden, daß jede Rechnereinheit direkt mit jeder anderen Rechnereinheit Daten austauschen kann. Durch Verteilung in F+1 Verteilungszyklen und Überprüfung dieser Daten nach dem byzantinen Algorithmus kann hierbei eine fehlerhafte Rechnereinheit erkannt und deaktiviert werden, wobei die nicht betroffenen Rechnereinheiten mit gültigen Daten weiterarbeiten.

Jede Rechnereinheit enthält zu diesem Zweck je einen Datenspeicher DS1 bis DS(3F+1). Zur Verdeutlichung der der Erfindung zugrundeliegenden Problematik sollen zunächst, beispielhaft für F=1, kurz die Verschaltungen und Abläufe in derartigen fehlertoleranten Rechnern anhand der Figuren 5, 5a, 5b und 5c beschrieben werden.

Fig. 5 zeigt, wie über Prozeßsignalleitungen 1-5 Prozeßsignale jeder Rechnereinheit RE1, RE2, RE3, RE4 zugeführt werden. Weitere Datenleitungen 6-11 verbinden jede Rechnereinheit mit je einer anderen Rechnereinheit. Jede dieser Datenleitungen 6-11 besteht im einzelnen aus bi-direktionalen Verbindungen für Daten, Deaktivierungs- und Taktsignale. Die in Fig. 5 dargestellten Leitungen 1 bis 11 finden sich in entsprechender Weise in den Fig. 5a, 5b und 5c wieder, jedoch ohne Angabe von Bezugsziffern.

Jede der vier Rechnereinheiten RE1 bis RE4 weist eine Prozeß-Schnittstelle PSS, eine Überwachungslogik ÜL sowie einen anwendungspezifischen Prozessor AP auf. Die Datenspeicher DS1 bis DS4 gehören zur Überwachungslogik ÜL und dienen dem Speichern von eingelesenen Prozeßdaten.

Die in der Rechnereinheit erzeugten bzw. von einer Prozess-Schnittstelle PSS eingelesenen originären Daten d1 bis d4 werden zunächst in den jeweils eigenen Datenspeicher DS1 bis DS4 gemäß Figur 5a übernommen.

Anschließend überträgt jede Rechnereinheit in einem ersten Datenverteilungszyklus gemäß Figur 5b ihre originären Daten d1 bis d4 an jede andere Rechnereinheit in den zugehörigen Datenspeicher. Am Ende dieses Verteilungszyklus enthält also jeder Datenspeicher die gemäß Figur 5a eingelesenen, eigenen Daten d1; d2; d3; d4 sowie die jeweils mit d1/RE1; d2/RE2; d3/RE3; d4/RE4 bezeichneten Daten der anderen Rechnereinheiten.

In einem zweiten Datenverteilungszyklus gemäß Figur 5c überträgt dann jede Rechnereinheit alle gemäß Figur 5b erhaltenen Daten in die Datenspeicher derjenigen beiden Rechnereinheiten, die diese Daten nicht schon originär gemäß Figur 5a erhalten hatten. Somit enthält am Ende dieses Verteilungszyklus jeder Datenspeicher DS1, DS2, DS3 und DS4 die eigenen Daten gemäß Figur 5a, sowie jeweils drei Datenblöcke DB1, DB2 und DB3, wobei die originären Daten di der drei anderen Rechnereinheiten, die jeweils von einer anderen der drei Rechnereinheiten RE*i* übertragen wurden, in einem Datenblock enthalten sind.

Die Auswertung erfolgt dann in jeder Rechnereinheit jeweils durch einen ersten Vergleich der drei Daten innerhalb eines jeden Datenblocks auf bitweise Identität und in einem zweiten Vergleich der Datenblöcke DB1 bis DB3 untereinander sowie mit den jeweils originären Daten gemäß Figur 5a auf Identität, wobei zwischen kongruenter (d.h. bitidentischer) und quasi-kongruenter Identität (d.h. Identität innerhalb eines Toleranzbereiches) unterschieden werden kann. Wird durch die anschließende Bewertung der Vergleichsergebnisse mittels des bekannten byzantinen Algorithmus eine fehlerhafte Rechnereinheit identifiziert, erzeugt und überträgt die Rechnereinheit ein Deaktivierungssignal an die als fehlerhaft identifizierte Rechnereinheit. Wenn diese Rechnereinheit von allen drei anderen Rechnereinheiten ebenfalls je ein Deaktivierungssignal erhält, wird diese Rechnereinheit deaktiviert.

Bekannte Rechnereinheiten bzw. daraus gebildete Verbunde gemäß DE 44 01 168 C2 haben jedoch den Nachteil, daß wegen der unterschiedlichen Inhalte der Datenspeicher (vergl. Figure 5c) sowie der Verteilung und des Vergleichs der Daten auf einer logischen Ebene (Datenstrom) oberhalb der Einzeldaten eine für jede Rechnereinheit individuelle Datenauswertung erforderlich ist, was zur Folge hat, daß bekannte Rechnereinheiten bzw. daraus gebildete Verbunde dieser Art relativ langsam arbeiten, da die Übertragung und Auswertung der Datensätze einen hohen Rechenaufwand erfordert.

Aus der US 4 907 232 A ist eine entsprechende fehlertolerante Anordnung mit mehreren in Verbund betreibbare Logikeinheiten bekannt, wobei jeder Ausgang auf den weiteren Logikeinheiten verbunden ist. Hierbei sollen etwaige bei der Verarbeitung auftretende Fehler erkannt werden können, ohne daß dabei das Gesamtsystem nachhaltig betroffen wird. Falls eine Logikeinheit als fehlerhaft erkannt wird, kann eine Deaktivierung der entsprechenden Logikeinheiten erfolgen. Diese hierbei verwendete absolute Identifikation der Register ist nachteilig, da in jeder Logikeinheit eine individuelle, d.h. von den anderen Logikeinheiten unterschiedliche, Datenauswertung notwendig ist.

Der Erfindung, die in den beiden unabhängigen Ansprüchen 1 und 19 definiert wird, liegt deshalb die Aufgabe zugrunde, einen fehlertoleranten Verbund einzelner Logikeinheiten bzw. Rechnereinheiten, diese Einheiten selbst sowie ein Verfahren zum Betreiben des Verbundes, jeweils nach der eingangs genannten Art, zu schaffen, der/die/das schneller arbeitet/arbeiten und zuverlässiger ist/sind.

Gelöst wird diese Aufgabe mit einer Logikeinheit der eingangs genannten Art, die dadurch gekennzeichnet ist, daß die Register derart mit den - mit je einem Ausgang verbundenen - Eingängen und Ausgängen gekoppelt sind, daß jedes Register unabhängig von der Position der Logikeinheit innerhalb des Verbundes mittels einer positionsinvarianten, relativen Identifikation ein- und auslesbar ist.

Ferner wird die Aufgabe gelöst durch eine Rechnereinheit mit einer derartigen Logikeinheit sowie durch einen fehlertoleranten Verbund von wenigstens 3F+1 identisch aufgebauten derartigen Logikeinheiten oder Rechnereinheiten, wobei die Eingänge und Ausgänge der Logikeinheiten bzw. Rechnereinheiten derart miteinander verbunden sind, daß korrespondierende Register verschiedener Logikeinheiten bzw. Rechnereinheiten Daten gleicher relativer Identifikation des Ursprungs und der übertragenden Rechnereinheit aufweisen.

Schließlich wird die Aufgabe gelöst durch ein Verfahren zum Betreiben eines erfindungsgemäßen Verbundes mit wenigstens 3F+1 erfindungsgemäßen Logikeinheiten oder Rechnereinheiten, wobei F die Anzahl der zeitgleich zu tolerierenden Fehler ist, mit F+1 Datenverteilungszyklen, wobei eingelesene Daten beim Einlesen und beim Verteilen mit einer relativen Identifikation gekennzeichnet werden, wobei die relative Identifikation der Daten in korrespondierenden Registern der verschiedenen Logikeinheiten bzw. Rechnereinheiten identisch ist.

Die relative Identifikation ermöglicht es auf vorteilhafterweise, identische Rechner- oder Logikeinheiten zu einem Verbund aufzubauen. Dadurch ist es möglich, Rechner- oder Logikeinheiten eines Verbunds an beliebigen Positionen innerhalb des Verbundes in Betrieb zu nehmen, ohne daß irgendwelche Anpassungen vorzunehmen wären. Ferner erlaubt die Erfindung die Datenverteilung und den erforderlichen Datenvergleich ausschließlich durch Hardware und nicht durch Software durchzuführen, so daß ein fehlertoleranten Verbund gegenüber bekannten Verbunden wesentlich schneller und zuverlässiger arbeitet.

Bevorzugt weist jede Rechnereinheit eine ihr zugeordnete identische Logikeinheit auf. Für den Sonderfall F=1 umfaßt jede Logikeinheit jeweils zehn Hardware-Schieberegister, drei Eingänge, die zum Einlesen von Datensätzen über erste Umschalteinrichtungen mit neun dieser Register verbindbar sind, sowie einen weiteren Eingang, der zum Einlesen der originären Prozessdaten dient. Desweiteren weist jede Logikeinheit drei Ausgänge, die zum Auslesen von Daten über jeweils eine zweite Umschalteinrichtung mit allen Registern verbindbar sind. Dabei ist jeder Ausgang jeder Logikeinheit jeweils mit einem Eingang einer solchen anderen Logikeinheit in der Weise verbunden, daß die in das erste Register jeder Logikeinheit eingelesenen Daten mit einem ersten Datenverteilungszyklus in ein Register jeder anderen Logikeinheit übertragen werden. In einem anschließenden, zweiten Datenverteilungszyklus werden die mit dem ersten Zyklus von allen anderen Rechnereinheiten erhaltenen Daten aus jedem Registersatz in die jeweils beiden anderen Registersätze übertragen, die im vorhergehenden Zyklus nicht Versender der jeweiligen Daten waren. Dabei erfolgt die Kennzeichnung der Daten und der Logikeinheiten durch relative Identifikation und zyklische modulo4-Zählung. Die Daten werden so verteilt, daß diese in gleichen Registern aller Registersätze jeweils gleichen relativen Ursprung haben und jeweils aus einem Registersatz mit gleicher relativer Identifikation übertragen wurden.

Bevorzugt weist jede Logikeinheit eine Mehrzahl von Deaktivierungsleitungen auf, mittels derer Deaktivierungssignale an weitere Logikeinheiten versendet bzw. Deaktivierungssignale von weiteren Logikeinheiten empfangen werden können, falls ein Fehler erkannt worden ist. Nach einer erfolgten Deaktivierung kann besonders bevorzugt eine Reaktivierung einer Logikeinheit eingeleitet werden. Sowohl bei Reaktivierung als auch bei der Initialaktivierung jeder Logikeinheit werden die Logikeinheiten mit Hilfe zyklischer Datenkommunikation synchronisiert.

Vorteilhafterweise wird anhand eines Deaktivierungsstatus entschieden, ob Daten einer weiteren Einheit von der Datenverteilung und Datenbewertung ausgeschlossen oder einbezogen werden sollen.

Weitere Unteransprüche haben vorteilhafte Weiterbildungen der Erfindung zum Inhalt.

Weitere Einzelheiten, Merkmale und Vorteile der Erfindung ergeben sich aus der folgenden Beschreibung einer bevorzugten Ausführungsform anhand der Zeichnung. Es zeigt:
- Fig. 1: eine beispielhafte Schaltungsanordnung einer erfindungsgemäßen Rechnereinheit;
- Fig. 2: eine erfindungsmäßige Logikeinheit (BSL) mit Komponenten zur Datenverteilung;
- Fig. 3: einen erfindungsmäßigen Verbund von 3F+1 erfindungsgemäßen Logikeinheiten, wobei F=1 ist;
- Fig. 4: eine erfindungsmäßige Logikeinheit mit Komponenten zum Datenvergleich und einem Mikroprozessor;
- Fig. 5, 5a bis 5c: die Verschaltung sowie die Abläufe des Einlesens und Verteilens von Daten in einem bekannten fehlertoleranten Verbund von Rechnereinheiten;
- Fig. 6, 6a bis 6c: die Verschaltung sowie die Abläufe des Einlesens und Verteilens von Daten in einem erfindungsmäßigen fehlertoleranten Verbund.

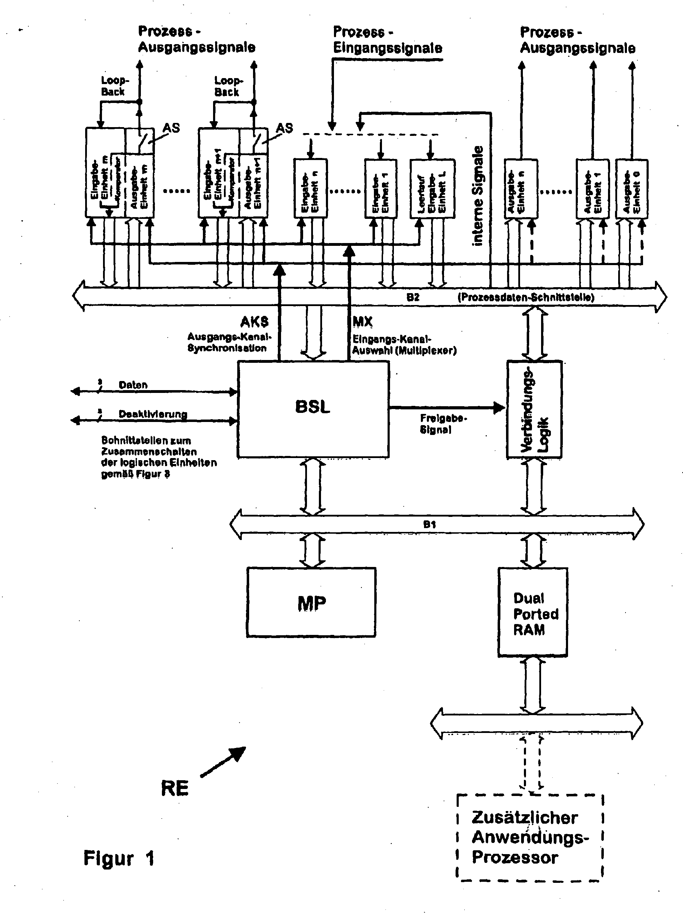

Figur 1 zeigt die prinzipielle Darstellung einer erfindungsgemäßen Rechnereinheit RE. Ein erfindungsgemäßer fehlertoleranter Verbund setzt sich aus 3F+1 dieser Rechnereinheiten zusammen.

Eine Rechnereinheit umfaßt im wesentlichen eine Logikeinheit BSL, die über einen geeigneten Bus B1 mit einem Mikroprozessor MP, und über einen anderen, der Bildung einer Prozeßdaten-Schnittstelle dienenden Bus B2 mit den Prozessdaten, insbesondere den Prozess-Eingangs- und Ausgangssignalen, verbunden ist. Über eine Verbindungslogik zwischen Bus B1 und Bus B2 hat der Mikroprozessor MP ebenfalls Zugriff zu den Prozessdaten, wobei der Zugriff zu den Prozessdaten durch die Logikeinheit BSL, insbesondere mittels eines Freigabesignals, kontrolliert wird, um den erforderlichen synchronen Ablauf der Logikeinheiten zu gewährleisten. Der Mikroprozessor MP dient zum Ausführen von Programmen zur Steuerung der Prozessdaten-Schnittstelle (direkt und/oder über die Logikeinheit BSL), sowie von anwendungsspezifischen Programmen. Weiterhin kann der Mikroprozessor über Bus B1 und Dualported RAMs mit zusätzlichen anwendungsspezifischen Prozessoren verbunden werden.

Um eine Mehrzahl von Eingangsdaten synchron zu verarbeiten, enthält jede Logikeinheit BSL eine Multiplexfunktion MX, welche die Eingangsdaten sequentiell an die Prozessdaten-Schnittstelle (Bus B2) durchschaltet. Außerdem dient die Multiplexfunktion zur Auswahl eines Leerlaufkanals L zur Aufrechterhaltung des zyklischen Ablaufes, wenn zeitweise keine Prozeß-Eingangsdaten anliegen, damit die Logikeinheit BSL ereignisunabhängig und absolut deterministisch arbeitet. Der betreffende Leerlaufkanal kann auch dazu dienen, verschiedene Rechneranwendungen miteinander zu synchronisieren, sofern dies erforderlich ist. Eine besonders vorteilhafte Ausgestaltung der Erfindung ist die Auswahl der entsprechenden Eingabeeinheit, die in der Weise realisiert wird, daß bei jedem Datenzyklus (n) die anstehenden Anforderungs-Signale der Eingangskanäle mit verteilt werden und durch eine Mehrheitsentscheidung der im Datenzyklus (n+1) zu bearbeitende Kanal ausgewählt wird.

Bevorzugt erfolgt die Synchronisation der Logikeinheiten über den Datentransfer zwischen den Logikeinheiten.

Schließlich ist es auch möglich, mit Hilfe kombinierter Eingabe-/Ausgabe-Einheiten, Daten, die an diese zur Ausgabe übergeben wurden, jedoch nur von der kombinierten Eingabe-/Ausgabe-Einheit als Prozess-Ausgangssignal nach außen versandt wurden, bei der der Ausgangs-Schalter AS geschlossen war, über Loopback-Leitungen zu allen gleichen Eingangs-Einheiten (n+1, n+2, etc.) zurückzuführen und mit Hilfe eines Komparators mit den zur Ausgabe übergebenen Daten zu vergleichen. Das jeweilige Vergleichsergebnis wird als Bestandteil der Eingangsdaten (zurückgelesene Ausgangsdaten) nach dem byzantinen Algorithmus verteilt und überprüft. Auf diese Art ist es möglich, den Ausgabeweg der Rechnereinheiten RE inklusive der kombinierten Eingabe-/Ausgabe-Einheiten nach dem byzantinen Algorithmus auf fehlerfreie Funktion zu überprüfen. Zu diesem Zweck werden die Ausgabe-Einheiten der kombinierten Eingabe-/Ausgabe-Einheiten von der Logikeinheit BSL über ein entsprechendes Signal synchronisiert. Außerdem können auf gleiche Weise Ausgabe-Einheiten 0 bis n synchronisiert werden.

Aus dieser Darstellung wird eine weitere besondere vorteilhafte Ausgestaltung der Erfindung deutlich, die darin besteht, daß die Logikeinheit BSL flexibel einsetzbar und applikations-unabhängig ist, da sie jeweils zwischen die Prozessdaten-Schnittstelle (Bus B2) und den Anwendungs-Prozessor geschaltet ist. Die Anwendung erhält somit ihre Daten entweder direkt aus der Prozessdaten-Schnittstelle oder nach der Überprüfung mittels des byzantinen Algorithmus zusammen mit Statusinformation über die Logikeinheit BSL.

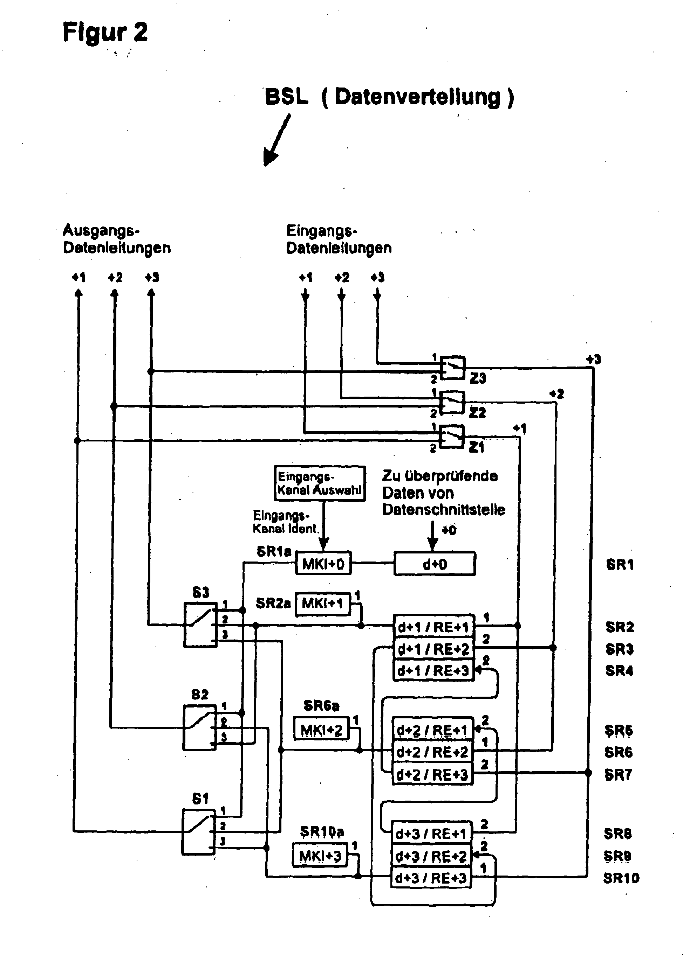

Figur 2 zeigt den zur Datenverteilung dienenden Anteil einer Logikeinheit BSL sowie einen zugehörigen Schieberegistersatz bestehend aus Schieberegistern SR1 - SR10 im Detail. Ferner sind Zusatzregister SR1a, SR2a, SR6a und SR10a vorgesehen, die mit dem ersten, zweiten, sechsten bzw. zehnten Register SR1, SR2, SR6, SR10 sowie mit einer Multiplexer-Steuerung verbunden sind. Diese Zusatzregister beinhalten die jeweils ausgewählte Multiplexerkanal-Identifikation MKI+*i* und dienen zusammen mit der Multiplexer-Steuerung zur, zwischen den Logikeinheiten BSL koordinierten, Vorauswahl des jeweils nächsten Eingangskanals, der dann im nächsten Datenzyklus über jeden Multiplexer an die zugehörige Logikeinheit BSL durchgeschaltet wird.

Die Schieberegister SR1+SR1a, SR2, SR6 und SR10 sind während des Auslesevorgangs rückgekoppelt (nicht dargestellt), so daß nach Abschluß des Auslesevorgangs wieder die ursprünglichen Daten in den jeweiligen Registern vorhanden sind.

Weiterhin sind Zusatzschalter Z1 bis Z3 vorgesehen, die jeweils in die Eingangs-Datenleitungen +1, +2, +3 des Registersatzes geschaltet sind. Diese Zusatzschalter dienen zur Generierung eines vollständigen Datensatzes, wenn eine der Logikeinheiten deaktiviert wurde. In diesem Falle wird der Zusatzschalter in der zur deaktivierten Logikeinheit führenden Eingangs-Datenleitung gegenüber der dargestellten Stellung 1 auf Stellung 2 umgelegt, so daß die aus den Registern ausgelesenen und über den zur deaktivierten Logikeinheit zugeordneten Schalter S1, S2 oder S3 geführten Daten wieder eingelesen werden, um in den betroffenen Schieberegistern SR*i* wieder gültige Daten zu speichern.

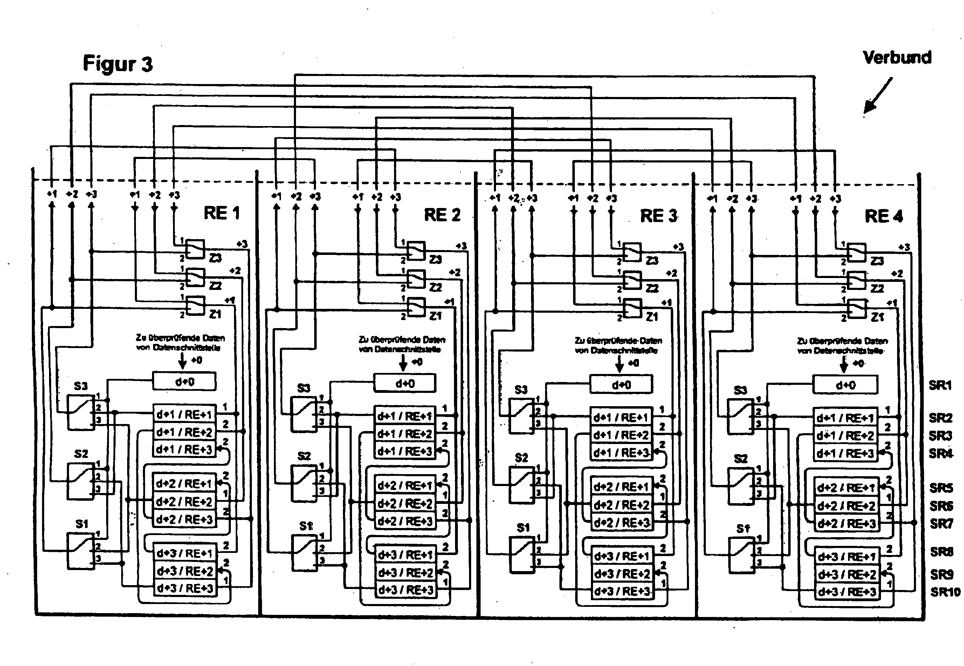

Die Bedingungen im Hinblick auf die Stellungen der Schalter S1 bis S3 sowie die mit den Ziffern 1 und 2 bezeichneten Eingänge der Schieberegister werden im Zusammenhang mit Figur 3 erläutert.

In Figur 3 sind die zur Datenverteilung dienenden Anteile der Logikeinheiten BSL (vergl. Figur 2) von vier Rechnereinheiten RE1, RE2, RE3, RE4 zu einem Verbund in der erfindungsgemäßen Weise zusammengeschaltet. Die in Figur 2 dargestellten Zusatzregister SR*i*a sind in Figur 3 weggelassen, da sie zur Erläuterung der Datenverteilung zwischen den Rechnereinheiten (RE1 bis RE4) nicht notwendig sind.

Die Datenverteilungszyklen werden gemäß der Erfindung durch die in Figur 3 dargestellte Verschaltung der einzelnen Register in Verbindung mit einer Ablaufsteuerung und einer relativen Identifikation der dargestellten Logikeinheiten der vier Rechnereinheiten RE1 bis RE4 (modulo4-Zählung) realisiert.

Der Datenaustausch zwischen den Logikeinheiten der Rechnereinheiten (RE1 bis RE4) erfolgt in zwei Datenverteilungszyklen. Die Ziffern 1 und 2 an den Eingängen der Schieberegister SR1 bis SR10 zeigen an, in welchem der zwei Verteilungszyklus über den jeweiligen Eingang Daten eingelesen werden. Die ersten bis dritten Schalter S1, S2 und S3 in jeder Logikeinheit haben jeweils drei Schaltstellungen. Die dargestellte Schaltstellung 1 wird während des ersten Verteilungszyklusses eingenommen, die Schalterstellung 2 während des zweiten Verteilungszyklusses für jeweils einen ersten Datensatz, und die Schaltstellung 3 während des zweiten Verteilungszyklusses für jeweils einen zweiten Datensatz. Der Ablauf ist im einzelnen wie folgt:

Die Rechnereinheiten RE1 bis RE4 bzw. deren dargestellten Logikeinheiten sind einander in einer zyklisch aufsteigenden Zählweise (modulo4-Zählung) zugeordnet, wobei eine Rechnereinheit, die unmittelbar rechts neben einer anderen Rechnereinheit liegt, dieser gegenüber die relative Adresse +1 und die sich rechts daran anschließende Rechnereinheit die relative Adresse +2 usw. hat.

Die von dem Verbund zu verarbeitenden und im Hinblick auf Fehlerfreiheit zu überprüfenden Daten werden zunächst jeder Logikeinheit über die ihr zugehörige Prozeßdatenschnittstelle, nämlich den Bus B2, zugeführt und in das jeweils erste Schieberegister SR1 des entsprechenden Registersatzes eingelesen.

Mit einem ersten Datenverteilungszyklus werden dann alle Daten d+0 aus den ersten Registern SR1 über den jeweiligen Schalter S1 in Schalterstellung 1 in das zehnte Register SR10 des benachbarten Registersatzes mit der relativen Adresse +1 übertragen.

Gleichzeitig werden die in die jeweils ersten Register SR1 der vier Einheiten eingelesenen Daten auch über jeden zweiten Schalter S2 in Schalterstellung 1 in das sechste Register SR6 des übernächsten Registersatzes mit der relativen Adresse +2 und über jeden dritten Schalter S3 in Schalterstellung 1 in das zweite Register SR2 des links benachbarten Registersatzes mit der relativen Adresse +3 übertragen. Am Ende dieses ersten Datenverteilungszyklus enthält somit jeder Registersatz in dem jeweils ersten Register SR1 die ihm ursprünglich zugeführten Daten, sowie weiterhin in den Registern SR2, SR6 und SR10 die ursprünglichen Daten aus den drei anderen Registersätzen, die jeweils über diese logische Einheit zugeführt wurden.

Die entsprechenden Daten tragen die Bezeichnung d+*i*/RE+*j*. Die Ziffer *i* bezeichnet dabei den Ursprung der Daten d, das heißt in relativer Identifikation diejenige Rechnereinheit, in die die Daten ursprünglich eingelesen wurde, während die Ziffer *j* diejenige Rechnereinheit RE bezeichnet, von der diese Daten übertragen wurde. Die Daten aller zweiten Register SR2 stammen somit aus dem in aufsteigender Zählweise jeweils benachbarten, das heißt rechts daneben liegenden Registersatz mit der relativen Identifikation +1 und wurden auch über diesen zugeführt.

Die Zusatzregister SR2a+*i* (in Figur 3 nicht dargestellt) sind im ersten Verteilungszyklus als Verlängerung der Register SR2+*i* zu betrachten; ihre Inhalte werden zusammen mit den Inhalten der Register SR2+*i* wie oben beschrieben verteilt. Im zweiten Verteilungszyklus sind diese Zusatzregister inaktiv.

Nach Abschluß des ersten Verteilungszyklus beginnt ein erster Teil des zweiten Datenverteilungszyklusses, nachdem die ersten bis dritten Schalter S1 bis S3 in die Stellung 2 umgelegt worden sind.

Über die ersten Schalter S1 werden nun die Daten aus den sechsten Registern SR6 in den Registersatz mit der relativer Adresse +1 und dort zunächst in das siebte Register SR7 übertragen, von wo sie dann, während des zweiten Teils des zweiten verteilungszyklusses, jeweils in das fünfte Register SR4 geschoben werden. Über die zweiten Schalter S2 werden weiterhin die Inhalte der zehnten Register SR10 in den Registersatz mit der relativer Adresse +2 und dort zunächst in das jeweilige dritte Register SR3 geladen, von wo sie dann, während des zweiten Teils des zweiten Verteilungszyklusses, jeweils in das neunte Register SR9 geschoben werden. Über die dritten Schalter S3 werden schließlich die Inhalte der zweiten Register SR2 in den Registersatz mit der relativen Adresse +3 und dort zunächst in das jeweilige achte Register SR8 geladen, von wo sie dann, während des zweiten Teils des zweiten Verteilungszyklusses, jeweils in das fünfte Register SR5 geschoben werden.

Damit ist der erste Teil des zweiten Datenverteilungszyklusses beendet. Die Schalter S1 bis S3 werden nun in die Stellung 3 umgelegt, so daß der zweite Teil des zweiten Datenverteilungszyklusses beginnen kann.

Über die ersten Schalter S1 werden dabei die Inhalte der zehnten Register SR10 jedes Registersatzes in den Registersatz mit der relativen Adresse +1 übertragen und dort in dem siebten Register SR7 gespeichert. Über die zweiten Schalter S2 werden die Inhalte der zweiten Register SR2 jedes Registersatzes in denjenigen mit der relativen Adresse +2 übertragen und dort in dem dritten Register SR3 gespeichert. Über die dritten Schalter S3 werden schließlich die Inhalte der sechsten Register SR6 jedes Registersatzes in denjenigen mit der relativen Adresse +3 und dort in das achte Register SR8 übertragen.

Bei jeder Übertragung eines Datums ändert sich dessen Bezeichnung in Hinblick auf seinen Ursprung d sowie der Rechnereinheit RE, aus dem es übertragen wurde, aufgrund der relativen Identifikation der Rechnereinheiten entsprechend. Dadurch ergibt sich nach Abschluß des zweiten Datenverteilungszyklus die in den Figuren 2 und 3 dargestellte Registerbelegung, die in allen Rechnereinheiten RE1 bis RE4 gleich ist.

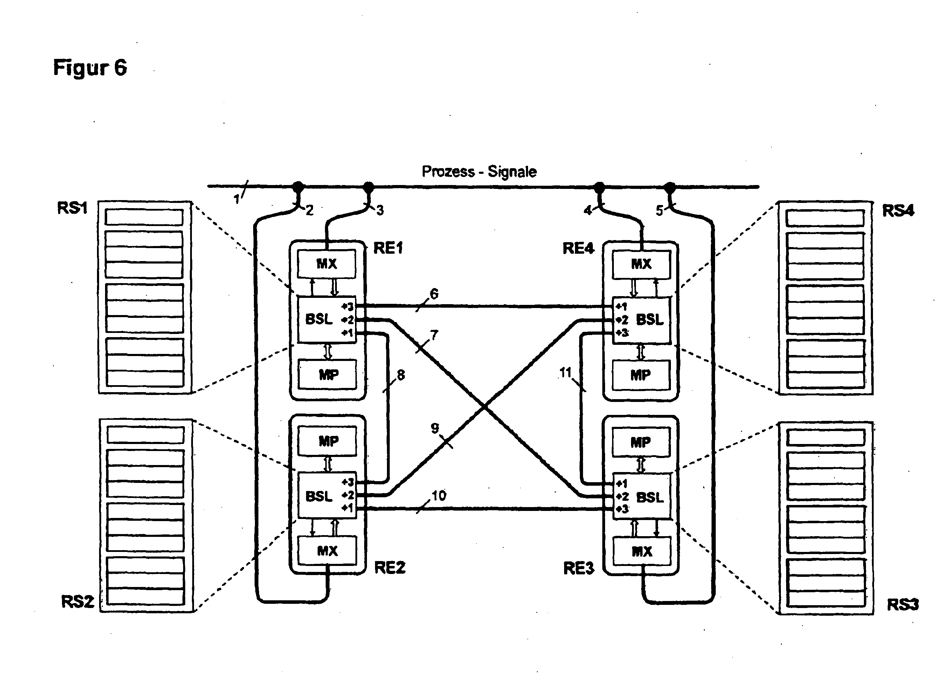

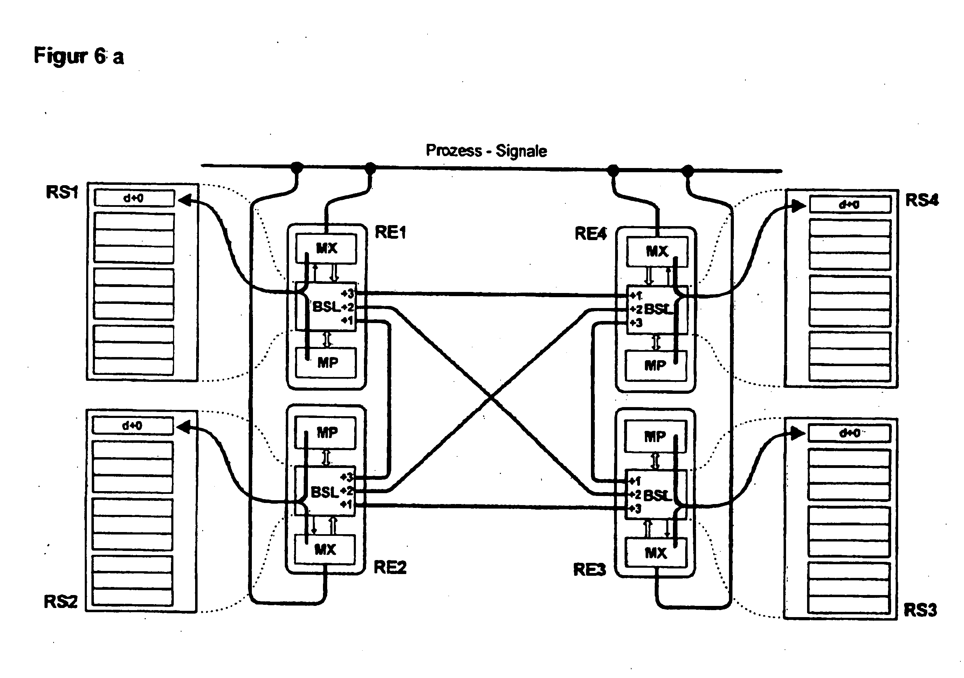

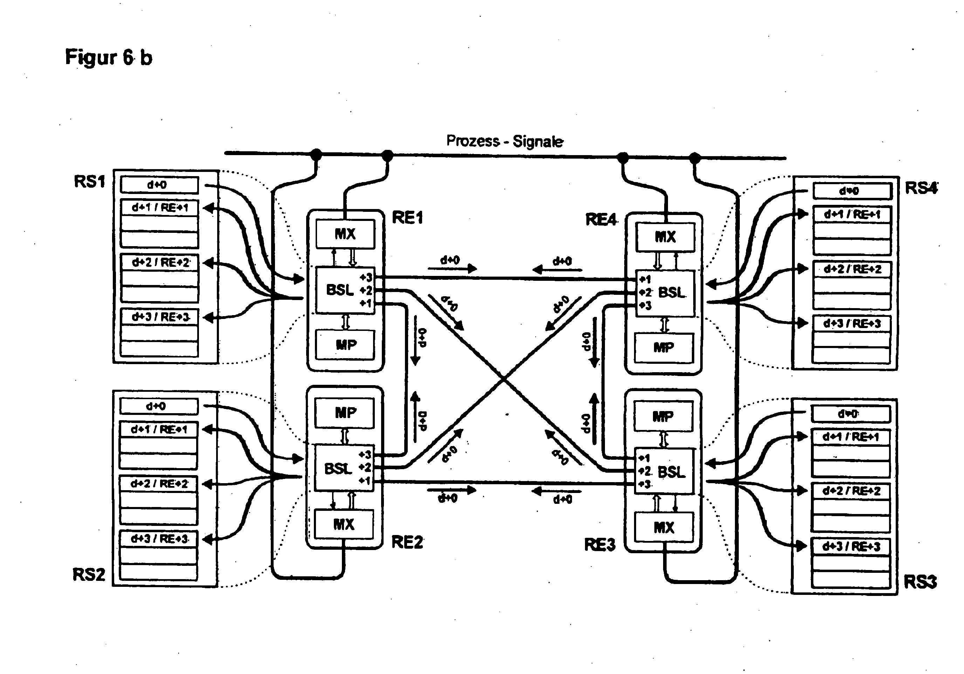

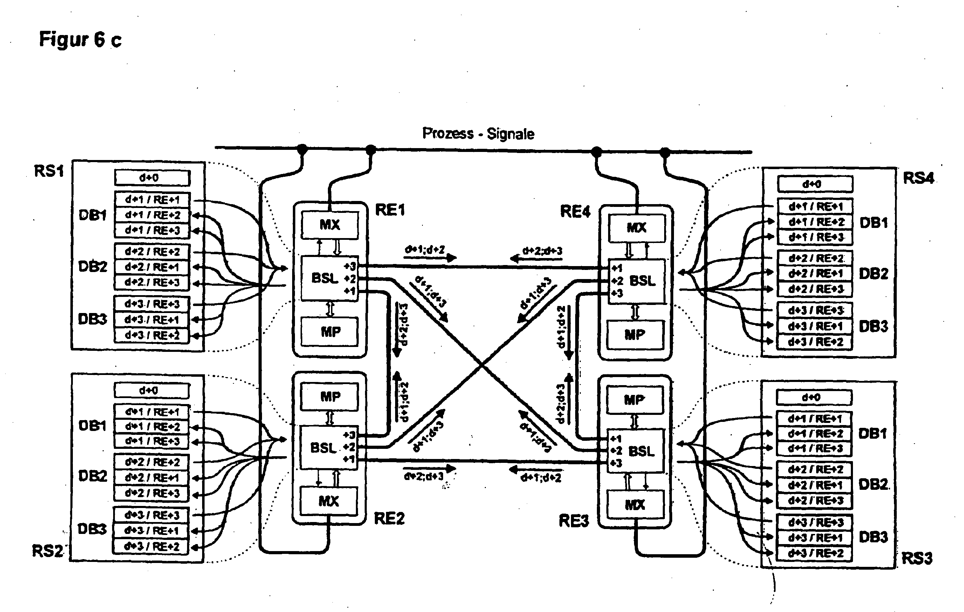

Fig. 6 zeigt einen Verbund von vier je eine Logikeinheit BSL aufweisende Rechnereinheiten RE1, RE2, RE3, RE4. Diese Rechnereinheiten sind, wie die in Fig. 5 gezeigten, mit Prozeßsignalleitungen 1 bis 5 verbunden zur Ein- und Ausgabe von Prozeßdaten. Die Datenleitungen 6 bis 11 bilden, wie in Fig. 5, bidirektionale Verbindungen zwischen den Rechnereinheiten RE1 bis RE4 für die Übertragung von Daten und Deaktivierungssignalen. Die in Fig. 6 dargestellten Leitungen 1 bis 11 finden sich in entsprechender Weise in den Fig. 6a, 6b und 6c wieder, dort jedoch ohne Angabe von Bezugsziffern.

Jede Rechnereinheit RE1 bis RE4 weist eine Logikeinheit BSL auf, die mit den mit der relativen Identifikation +1, +2, +3 bezeichneten Ein-/Ausgängen über die Datenleitungen 6 bis 11 verbunden sind. Bei den in Fig. 6 dargestellten Rechnereinheiten sind die Logikeinheiten BSL jeweils mit einem Mikroprozessor MP verbunden, wie im Hinblick auf Fig. 1 erläutert. Ferner ist die in den Logikeinheiten BSL realisierte Multiplexfunktion schematisch durch einen Block MX dargestellt. Jede Logikeinheit BSL weist einen Registersatz RS1, RS2, RS3 oder RS4 auf und zwar gemäß Fig. 2 bestehend aus den Registern SR1 bis SR10.

Die einzelnen Schritte der erfindungsmäßigen, vorstehend erläuterten Datenverteilung sind in Fig. 6a bis 6c dargestellt. Aus einem Vergleich der Darstellung in Figur 6c und der Darstellung bekannter Rechner gemäß Figur 5c wird deutlich, daß die Inhalte aller vier Registersätze RS1 bis RS4 nach Abschluß der Datenverteilungszyklen gleich sind (Figur 6c), wohingegen die Datenspeicher DS1 bis DS4 (Figur 5c) unterschiedliche Inhalte aufweisen - jeweils Fehlerfreiheit vorausgesetzt. Somit entfällt bei der erfindungsmäßigen Rechnereinheit bzw. Logikeinheit eine individuelle Datenauswertung wie sie bei bekannten Rechnereinheiten notwendig ist. Dadurch ergibt sich der Vorteil, daß im Gegensatz zu dem Aufbau eines bekannten fehlertoleranten Verbundes der erfindungsgemäße Verbund mit identischen Rechnereinheiten bzw. Logikeinheiten realisierbar ist, unabhängig von deren physikalischem Einsatzort im Rechnerverbund.

Die in Figur 3 dargestellte Verschaltung der Rechnereinheiten ist neben den oben erläuteten Datenleitungen auch für die Deaktivierungsleitungen (nicht dargestellt) vorzusehen. In Figur 1 sind diese Leitungen als Ein- und Ausgangsleitungen der Logikeinheit BSL dargestellt.

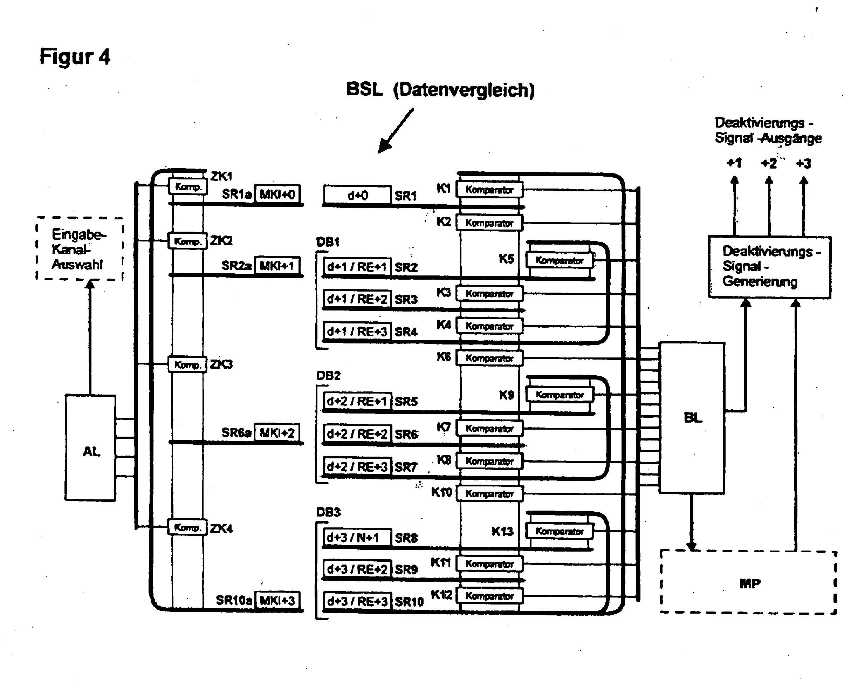

Figur 4 zeigt prinzipiell den Vergleich und die Auswertung der eingelesenen Daten sowie Datenblöcke DB1 bis DB3. Zur Ermittlung der Identitäten sind eine Mehrzahl von Komparatoren vorgesehen. Sie sind in der Weise angeordnet, daß pro Datenblock DB*i* je ein innerer Komparatorring bestehend aus 3 Komparatoren K3, K4, K5 bzw. K7, K8, K9 bzw. K11, K12, K13 entsteht, sowie ein äußerer Komparatorring, bestehend aus den 4 Komparatoren K1, K2, K6 und K10, der die 3 inneren Komparatorringe und das Register SR1 miteinander verbindet.

Mit einem ersten Komparator K1 werden die Inhalte des ersten und zehnten Registers SR1, SR10 verglichen, mit einem zweiten Komparator K2 die Inhalte des ersten und zweiten Registers SR1, SR2, mit einem dritten Komparator K3 die Inhalte des zweiten und dritten Registers SR2, SR3, mit einem vierten Komparator K4 die Inhalte des dritten und vierten Registers SR3, SR4, sowie mit einem fünften Komparator K5 die Inhalte des zweiten und vierten Registers SR2, SR4.

In entsprechender Weise dient ein sechster Komparator K6 zum Vergleich der Inhalte des vierten Registers SR4 mit dem fünften Register SR5, ein siebter Komparator K7 zum Vergleich der Inhalte des fünften und sechsten Registers SR5, SR6, ein achter Komparator K8 zum Vergleich der Inhalte des sechsten und siebten Registers SR6, SR7, sowie ein neunter Komparator K9 zum Vergleich der Inhalte des fünften und siebten Registers SR5, SR7.

Schließlich dient ein zehnter Komparator K10 zum Vergleich der Inhalte des siebten Registers SR7 mit dem achten Register SR8, ein elfter Komparator K11 zum Vergleich der Inhalte des achten und neunten Registers SR8, SR9, ein zwölfter Komparator K12 zum Vergleich der Inhalte des neunten und zehnten Registers SR9, SR10 sowie ein dreizehnter Komparator K13 zum Vergleich der Inhalte des achten und zehnten Registers SR8, SR10.

Die Ausgänge der Komparatoren K1 bis K13 sind mit einer Bewertungslogik BL verbunden, die im Fehlerfall einerseits Deaktivierungssignale initiieren kann und andererseits die Identifikation der Register mit fehlerfreien Daten an den Mikro-Prozessor sendet. Zum Auslesen der Registerinhalte sind alle Register mit dem Datenbus des Mikro-Prozessors verbunden (nicht dargestellt).

Der Datenvergleich erfolgt in zwei logischen Schritten, wobei in einem ersten Vergleich mit Hilfe der inneren Komparatorringe K3, K4, K5 bzw. K7, K8, K9 bzw. K11, K12, K13 die Daten d+*i* innerhalb eines Datenblocks DB*i,* die originär jeweils von der selben Logikeinheit bzw. Rechnereinheit RE+*i* stammen, aber über unterschiedliche Wege übertragen wurden, auf bitweise Identität geprüft werden. Wenn in einem dieser Vergleiche keine bitweise Identität festgestellt wird, liegt ein Fehler vor und es wird entsprechend dem byzantinen Algorithmus die Generierung eines Deaktivierungssignals an die fehlerhafte Logikeinheit bzw. Recheneinheit initiiert. Erhält eine Logikeinheit bzw. Rechnereinheit drei Deaktivierungssignale, so wird sie aus dem Rechnerverbund isoliert. Sind alle Daten d+*i* innerhalb des jeweiligen Datenblocks DB*i* bitweise identisch, werden in einem zweiten Vergleich mit Hilfe des äußeren Komparatorrings K1, K2, K6, K10 die Inhalte der Datenblöcke sowie der Inhalt des Registers SR1 miteinander verglichen, wobei zwischen kongruenten (alle Registerinhalte bitweise identisch) und quasi-kongruenten (bitweise identisch in den ersten Vergleichen, aber untereinander abweichend) Daten unterschieden werden kann. Bei kongruenten Daten liegt kein Fehler vor und es wird kein Deaktivierungssignal generiert; bei quasi-kongruenten Daten obliegt die Bewertung dieser Daten der Anwendung, die ggf. ebenfalls die Generierung eines Deaktivierungssignals initiieren kann.

Im linken Teil von Figur 4 sind wiederum die Zusatzregister SR1a, SR2a, SR6a und SR10a dargestellt, deren Inhalte ebenfalls über Komparatoren ZK1 bis ZK4 miteinander verglichen werden. Die Ausgänge der Komparatoren sind mit einer Auswahllogik AL verbunden, mit der eine Vorauswahl des nächsten durchzuschaltenden Multiplexerkanals erfolgt.

Da bei dem erfindungsgemäßen fehlertoleranten Verbund im Gegensatz zu bekannten Rechnerverbunden die Datenverteilung und der Datenvergleich auf bitweise Identität ausschließlich durch Hardware realisierbar ist, sowie auf der niedrigsten logischen Ebene, nämlich auf einzelnen Prozeßdateneinheiten durchgeführt wird, ist der erfindungsgemäße Verbund wesentlich schneller und zuverlässiger. Der Datendurchsatz ist besser, die Reaktionszeiten sind geringer, die Logikeinheiten bzw. Rechnereinheiten laufen absolut synchron und deterministisch.

## Patentansprüche

1. Logikeinheit zum Aufbau eines zeitgleich eine Anzahl F von Fehlern tolerierenden, nach dem byzantinen Algorithmus betreibbaren Verbundes mit mehreren Logikeinheiten mit
a) einer Mehrzahl von Eingängen (+0, +1, +2, +3) zum Einlesen von Daten in Register (SR1 bis SR10) eines Registersatzes und
b) einer Mehrzahl von Ausgängen (+1, +2, +3) zum Auslesen von Daten aus den Registern (SR1 bis SR10),
c) wobei jeder Ausgang (+1, +2, +3) mit einem Eingang (+1, +2, +3) einer weiteren Logikeinheit (BSL) verbindbar ist,
**dadurch gekennzeichnet, daß**
d) die Register (SR1 bis SR10) derart mit den letztgenannten Eingängen (+1, +2, +3) und Ausgängen (+1, +2, +3) gekoppelt sind, daß jedes Register (SR1 bis SR10) unabhängig von der Position der Logikeinheit (BSL) innerhalb des verbundes mittels einer positionsinvarianten, relativen Identifikation ein- und auslesbar ist.

2. Logikeinheit nach Anspruch 1, **dadurch gekennzeichnet, daß** sie eine Mehrzahl von Deaktivierungsleitungen aufweist zum versenden von Deaktivierungssignalen an weitere Logikeinheiten bzw. zum Empfangen von Deaktivierungssignalen von weiteren Logikeinheiten (BSL), falls ein Fehler erkannt worden ist.

3. Logikeinheit nach Anspruch 2, **dadurch gekennzeichnet, daß** sie derart ausgebildet ist, daß sie sich nach Aktivierung, insbesondere Initialaktivierung oder Reaktivierung, auf eine oder mehrere weitere Logikeinheiten (BSL) mit Hilfe zyklischer Datenkommunikation synchronisieren kann.

4. Logikeinheit nach einem der Ansprüche 1 bis 3, **dadurch gekennzeichnet, daß** sie derart ausgebildet ist, daß sie aufgrund eines Deaktivierungsstatus Daten einer weiteren Logikeinheit (BSL) von der Datenverteilung und Datenbewertung ausschließen oder in sie einbeziehen kann.

5. Logikeinheit nach einem der Ansprüche 1 bis 4, **dadurch gekennzeichnet, daß** sie eine Mehrzahl von Komperatoren (K1 bis K13) zum Vergleich der Registerinhalte (SR1 bis SR10) und eine mit den Komperatoren verbundene Bewertungslogik (BL) aufweist, mit der bei Abweichung bzw. Überschreiten einer zulässigen Abweichung ein Deaktivierungssignal für eine als fehlerhaft erkannte Logikeinheit (BSL) erzeugt werden kann.

6. Logikeinheit nach einem der Ansprüche 1 bis 5, **dadurch gekennzeichnet, daß** sie eine, insbesondere mit den weiteren Logikeinheiten (BSL) über den Datentransfer zwischen den Logikeinheiten (BSL) synchronisierbare, Multiplexfunktion (MX) aufweist zur Auswahl von über mehrere Kanäle zuführbare Prozeßdaten, insbesondere Prozeßeingangssignale und/oder als Loop-Back-Eingangssignale zugeführte Prozeß-Ausgangssignale.

7. Logikeinheit nach Anspruch 6, **dadurch gekennzeichnet, daß** jede Logikeinheit (BSL) eine Mehrzahl, insbesondere 3F+1, Zusatzregister (SR1a, SR2a, SR6a, SR10a) aufweist.

8. Logikeinheit nach einem der Ansprüche 1 bis 7, **dadurch gekennzeichnet, daß** sie eine Mehrzahl von Schaltern (Z1 bis Z3) aufweist, die zwischen den Eingängen (+1, +2, +3) und Registern angeordnet sind und bei Deaktivierung einer weiteren Logikeinheit (BSL) die aus den Registern (SR1 bis SR10) ausgelesenen Daten wieder anstelle der Daten der deaktivierten Logikeinheit (BSL) einlesen, um in den betroffenen Registern (SR1 bis SR10) wieder gültige Daten zu speichern.

9. Logikeinheit nach einem der Ansprüche 1 bis 8, **dadurch gekennzeichnet, daß** sie weitere Schalter (S1, S2, S3) aufweist, die zwischen den Ausgängen (+1, +2, +3) und Registern (SR1 bis SR10; SR1a, SR2a, SR6a, SR10a) angeordnet sind, wobei jeder dieser Schalter (S1, S2, S3) einen Ausgang (+1, +2, +3) mit einem von mehreren Registern (SR1 bis SR10; SR1a) verbinden kann.

10. Logikeinheit nach einem der Ansprüche 1 bis 9, **dadurch gekennzeichnet, daß** die Anzahl F tolerierbarer Fehler gleich eins ist, ein Registersatz zehn Register (SR1 bis SR10), insbesondere Hardware-Schieberegister, aufweist und vier Zusatzregister (SR1a, SR2a, SR6a, SR10a), 13 Komperatoren (K1 bis K13) zum Datenvergleich, vier Eingänge (+0, +1, +2, +3) zum Einlesen und drei Ausgänge zum Auslesen von Daten sowie drei Deaktivierungsleitungen vorgesehen sind.

11. Rechnereinheit, **gekennzeichnet durch** eine Logikeinheit (BSL) nach einem der Ansprüche 1 bis 10.

12. Rechnereinheit nach Anspruch 11, **gekennzeichnet durch** einen mit der Logikeinheit (BSL) verbundenen Mikroprozessor (MP), wobei der Mikroprozessor (MP) zum Verarbeiten von eingelesenen Datensätzen ausgebildet ist, um, insbesondere quasikongruente, Daten auf etwaige Fehler zu überprüfen und die Generierung eines Deaktivierungssignals zu initiieren.

13. Rechnereinheit nach Anspruch 11 oder 12, **dadurch gekennzeichnet, daß** sie Ausgänge für Prozeßausgangssignale mit Eingängen für Prozeßeingangssignale verbindende Datenleitungen (loop-back) zum Rückführen von Ausgabedaten zu diesen Eingängen aufweist.

14. Rechnereinheit nach Anspruch 13, **gekennzeichnet durch** wenigstens eine Eingabe-/Ausgabe-Einheit mit einem Komperator und einem Ausgangs-Schalter (AS), der nur im geschlossenen Zustand zur Ausgabe übergebene Daten als Prozess-Ausgangssignale ausgibt, wobei der Komperator zum Vergleichen der als Prozess-Ausgangssignale ausgegebenen Daten mit den zur Augabe übergebenen Daten dient und das Vergleichsergebnis als Bestandteil der Eingangsdaten nach dem byzantinen Algorithmus verteilbar und überprüfbar ist.

15. Rechnereinheit nach einem der Ansprüche 11 bis 14, **dadurch gekennzeichnet, daß** sie eine Verbindungslogik aufweist, über die der Mikroprozessor (MP) mittels der Logikeinheit (BSL) koordinierten Zugriff auf Prozeßdaten hat.

16. Fehlertoleranter Verbund von wenigstens 3F+1 identisch aufgebauten Logikeinheiten (BSL) nach einem der Ansprüche 1 bis 10 oder Rechnereinheiten (RE) nach einem der Ansprüche 11 bis 15, wobei die Eingänge und Ausgänge der Logikeinheiten (BSL) bzw. Rechnereinheiten (RE) derart miteinander verbunden sind, daß korrespondierende Register (SR1 bis SR10) verschiedener Logikeinheiten (BSL) bzw. Rechnereinheiten (RE) Daten (d+i/RE+j) gleicher relativer Identifikation des Ursprungs (d+i) und der übertragenden Rechnereinheit (RE+j) aufweisen.

17. Fehlertoleranter Verbund nach Anspruch 16, **dadurch gekennzeichnet, daß** die relative Identifikation durch eine zyklische, insbesondere zyklisch aufsteigende, modulo(3F+1)-Zählweise erfolgt.

18. Fehlertoleranter verbund nach Anspruch 16 oder 17, **dadurch gekennzeichnet, daß** die Logikeinheiten (BSL) bzw. Rechnereinheiten (RE) über den zwischen den Logikeinheiten (BSL) bzw. Rechnereinheiten (RE) stattfindenden Datenaustausch synchronisierbar sind.

19. Verfahren zum Betreiben eines fehlertoleranten Verbundes nach einem der Ansprüche 16 bis 18 mit wenigstens 3F+1 Logikeinheiten nach einem der Ansprüche 1 bis 10, oder Rechnereinheiten (RE) nach einem der Ansprüche 11 bis 15, wobei F die Anzahl der zeitgleich zu tolerierenden Fehler ist, mit F+1 Datenverteilungszyklen, **dadurch gekennzeichnet, daß** eingelesene Daten beim Einlesen und beim Verteilen mit einer positions invarianten relativen Identifikation **gekennzeichnet** werden, wobei die positions invarianten relative Identifikation der Daten in korrespondierenden Registern (SR1 bis SR10) der verschiedenen Logikeinheiten (BSL) bzw. Rechnereinheiten (RE) identisch ist.

20. Verfahren nach Anspruch 19, **dadurch gekennzeichnet, daß** die positions invariante relative Identifikation durch zyklische, insbesondere zyklisch aufsteigende, modulo(3F+1)-Zählung erfolgt.

## Claims

1. Logic unit for constructing an interconnected system which tolerates a number F of faults isochronously and can be operated according to the Byzantine algorithm, with multiple logic units with
a) multiple inputs (+0, +1, +2, +3) for reading data into registers (SR1 to SR10) of a register set, and
b) multiple outputs (+1, +2, +3) for reading data out of the registers (SR1 to SR10),
c) it being possible to connect every output (+1, +2, +3) to an input (+1, +2, +3) of a further logic unit (BSL),
**characterized in that**
d) the registers (SR1 to SR10) are connected to the above-mentioned inputs (+1, +2, +3) and outputs (+1, +2, +3) in such a way that each register (SR1 to SR10) can be read in and out by means of a position-invariant relative identification, irrespective of the position of the logic unit (BSL) within the interconnected system.

2. Logic unit according to Claim 1, **characterized in that** it has multiple deactivation lines for sending deactivation signals to further logic units and/or receiving deactivation signals from further logic units (BSL) if a fault has been detected.

3. Logic unit according to Claim 2, **characterized in that** it is in such a form that after activation, in particular initial activation or reactivation, it can synchronise itself onto one or more further logic units (BSL) using cyclic data communication.

4. Logic unit according to one of Claims 1 to 3, **characterized in that** it is in such a form that on the basis of a deactivation status, it can exclude data of a further logic unit (BSL) from data distribution and data evaluation, or include said data in them.

5. Logic unit according to one of Claims 1 to 4, **characterized in that** it has multiple comparators (K1 to K13) for comparing the register contents (SR1 to SR10), and evaluation logic (BL) which is connected to the comparators, and using which, in the case of a difference, or a permitted difference being exceeded, a deactivation signal for a logic unit (BSL) which is detected as faulty can be generated.

6. Logic unit according to one of Claims 1 to 5, **characterized in that** it has a multiplex function (MX), which in particular can be synchronised with the further logic units (BSL) via the data transfer between the logic units (BSL), for selecting process data which can be supplied via multiple channels, in particular process input signals and/or process output signals which are supplied as loop-back input signals.

7. Logic unit according to Claim 6, **characterized in that** each logic unit (BSL) has multiple, in particular 3F+1, additional registers (SR1a, SR2a, SR6a, SR10a).

8. Logic unit according to one of Claims 1 to 7, **characterized in that** it has multiple switches (Z1 to Z3), which are arranged between the inputs (+1, +2, +3) and registers, and if a further logic unit (BSL) is deactivated, read in the data which were read out of the registers (SR1 to SR10) again instead of the data of the deactivated logic unit (BSL), to store valid data again in the affected registers (SR1 to SR10).

9. Logic unit according to one of Claims 1 to 8, **characterized in that** has further switches (S1, S2, S3), which are arranged between the outputs (+1, +2, +3) and registers (SR1 to SR10; SR1a, SR2a, SR6a, SR10a), each of these switches (S1, S2, S3) being able to connect one output (+1, +2, +3) to one of multiple registers (SR1 to SR10; SR1a).

10. Logic unit according to one of Claims 1 to 9, **characterized in that** the number F of faults which can be tolerated equals one, a register set has ten registers (SR1 to SR10), in particular hardware shift registers, and four additional registers (SR1a, SR2a, SR6a, SR10a), 13 comparators (K1 to K13) for data comparison, four inputs (+0, +1, +2, +3) for reading in data, three outputs for reading out data, and three deactivation lines are provided.

11. Computer unit, **characterized by** a logic unit (BSL) according to one of Claims 1 to 10.

12. Computer unit according to Claim 11, **characterized by** a microprocessor (MP) which is connected to the logic unit (BSL), the microprocessor (MP) being designed to process read-in data sets, to check quasi-congruent data in particular for any errors and to initiate generation of a deactivation signal.

13. Computer unit according to Claim 11 or 12, **characterized in that** it has data lines which connect outputs for process output signals to inputs for process input signals (loop-back), for feeding output data back to these inputs.

14. Computer unit according to Claim 13, **characterized by** at least one input-output unit with a comparator and an output switch (AS), which outputs only data which are handed over in the closed state for output as process output signals, the comparator being used to compare the data which are output as process output signals with the data which are handed over for output, and it being possible to distribute and check the comparison result as part of the input data according to the Byzantine algorithm.

15. Computer unit according to one of Claims 11 to 14, **characterized in that** it has connecting logic via which the microprocessor (MP) has access, which is coordinated by means of the logic unit (BSL), to process data.

16. Fault-tolerant interconnected system of at least 3F+1 identically constructed logic units (BSL) according to one of Claims 1 to 10 or computer units (RE) according to one of Claims 11 to 15, the inputs and outputs of the logic units (BSL) or computer units (RE) being connected to each other in such a way that corresponding registers (SR1 to SR10) of different logic units (BSL) or computer units (RE) have data (d+i/RE+j) of the same relative identification of the origin (d+i) and transmitting computer unit (RE+j).

17. Fault-tolerant interconnected system according to Claim 16, **characterized in that** the relative identification takes place by a cyclic, in particular cyclically rising, modulo (3F+1) counting method.

18. Fault-tolerant interconnected system according to Claim 16 or 17, **characterized in that** the logic units (BSL) or computer units (RE) can be synchronised by the data exchange which takes place between the logic units (BSL) or computer units (RE).

19. Method of operating a fault-tolerant interconnected system according to one of Claims 16 to 18, with at least 3F+1 logic units according to one of Claims 1 to 10, or computer units (RE) according to one of Claims 11 to 15, where F is the number of faults to be tolerated isochronously, with F+1 data distribution cycles, **characterized in that** read-in data are identified when read in and distributed by a position-invariant relative identification, the position-invariant relative identification of the data being identical in corresponding registers (SR1 to SR10) of the various logic units (BSL) or computer units (RE).

20. Method according to Claim 19, **characterized in that** the position-invariant relative identification takes place by cyclic, in particular cyclically rising, modulo (3F+1) counting.

## Revendications

1. Unité logique pour élaborer un bloc exploitable selon l'algorithme byzantin et tolérant simultanément un nombre F de pannes avec plusieurs unités logiques, comprenant :
a) une pluralité d'entrées (+0, +1, +2, +3) pour introduire des données dans un registre (SR1 à SR10) d'un jeu de registres, et
b) une pluralité de sorties (+1, +2, +3) pour extraire des données des registres (SR1 à SR10),
c) chaque sortie (+1, +2, +3) pouvant être raccordée à une entrée (+1, +2, +3) d'une autre unité logique (BSL),
**caractérisée en ce que**
d) les registres (SR1 à SR10) sont couplés aux dernières entrées (+1, +2, +3) et sorties (+1, +2, +3) mentionnées de sorte que chaque registre (SR1 à SR10) puisse être chargé et lu indépendamment de la position de l'unité logique (BSL) au sein du bloc au moyen d'une identification relative à position invariable.

2. Unité logique selon la revendication 1, **caractérisée en ce qu'**elle présente une pluralité de lignes de désactivation pour envoyer des signaux de désactivation à d'autres unités logiques ou pour recevoir des signaux de désactivation d'autres unités logiques (BSL), si une panne a été détectée.

3. Unité logique selon la revendication 2, **caractérisée en ce qu'**elle est conçue de manière à pouvoir se synchroniser, après activation, en particulier après activation initiale ou réactivation, sur une ou plusieurs autres unités logiques (BSL) à l'aide d'une communication de données cyclique.

4. Unité logique selon l'une quelconque des revendications 1 à 3, **caractérisée en ce qu'**elle est conçue de manière qu'elle puisse, en raison d'un état de désactivation, exclure des données d'une autre unité logique (BSL) de la distribution et de l'évaluation des données ou les y intégrer.

5. Unité logique selon l'une quelconque des revendications 1 à 4, **caractérisée en ce qu'**elle présente une pluralité de comparateurs (K1 à K13) pour comparer les contenus des registres (SR1 à SR10) et un circuit logique d'évaluation (BL) raccordé aux comparateurs, avec lequel circuit un signal de désactivation peut être généré pour une unité logique (BSL) admise comme défaillante lors d'un écart ou d'un dépassement d'un écart autorisé.

6. Unité logique selon l'une quelconque des revendications 1 à 5, **caractérisée en ce qu'**elle présente une fonction de multiplexage (MX) en particulier synchrone avec les autres unités logiques (BSL) sur le transfert de données entre les unités logiques (BSL) pour choisir des données de traitement qui peuvent être acheminés sur plusieurs canaux, en particulier des signaux d'entrée de procédé et/ou des signaux de sortie de procédé acheminés sous la forme de signaux d'entrée à rétroaction.

7. Unité logique selon la revendication 6, **caractérisée en ce que** chaque unité logique (BSL) présente une pluralité, en particulier 3F+1, de registres d'appoint (SR1a, SR2a, SR6a, SR10a).

8. Unité logique selon l'une quelconque des revendications 1 à 7, **caractérisée en ce qu'**elle présente une pluralité de commutateurs (Z1 à Z3) qui est agencée entre les entrées (+1, +2, +3) et les registres et qui, lors d'une désactivation d'une autre unité logique (BSL), réintroduit les données extraites des registres (SR1 à SR10) en lieu et place des données de l'unité logique désactivée (BSL) afin de réenregistrer des données valables dans les registres concernés (SR1 à SR10).

9. Unité logique selon l'une quelconque des revendications 1 à 8, **caractérisée en ce qu'**elle présente d'autres commutateurs (S1, S2, S3) qui sont agencés entre les sorties (+1, +2, +3) et les registres (SR1 à SR10 ; SR1a, SR2a, SR6a, SR10a), chacun de ces commutateurs (S1, S2, S3) pouvant raccorder une sortie (+1, +2, +3) à l'un de plusieurs registres (SR1 à SR10 ; SR1a).

10. Unité logique selon l'une quelconque des revendications 1 à 9, **caractérisée en ce que** le nombre F de pannes tolérables est égal à un, **en ce qu'**un jeu de registres présente dix registres (SR1 à SR10), en particulier des registres à décalage hardware et **en ce qu'**il est prévu quatre registres d'appoint (SR1a, SR2a, SR6a, SR10a), 13 comparateurs (K1 à K13) pour la comparaison de données, quatre entrées (+ 0, +1, +2, +3) pour l'introduction de données et trois sorties pour l'extraction de données ainsi que trois lignes de désactivation.

11. Unité de calcul, **caractérisée par** une unité logique (BSL) selon l'une quelconque des revendications 1 à 10.

12. Unité de calcul selon la revendication 11, **caractérisée par** un microprocesseur (MP) raccordé à l'unité logique (BSL), lequel microprocesseur (MP) est conçu pour le traitement de jeux de données introduits afin de vérifier des données, en particulier des données quasi-congruentes, sur d'éventuelles pannes et d'initier la génération d'un signal de désactivation.

13. Unité de calcul selon la revendication 11 ou 12, **caractérisée en ce qu'**elle présente des lignes de données (à rétroaction) raccordant des sorties pour des signaux de sortie de procédé à des entrées pour des signaux d'entrée de procédé afin de renvoyer des données de sortie à ces entrées.

14. Unité de calcul selon la revendication 13, **caractérisée par** au moins une unité d'entrée/sortie dotée d'un comparateur et d'un commutateur de sortie (AS), qui ne délivre de données transmises à la sortie qu'à l'état fermé sous la forme de signaux de sortie de procédé, dans laquelle le comparateur sert à comparer les données délivrées comme signaux de sortie de procédé aux données transmises à la sortie et le résultat de la comparaison peut être distribué et vérifié comme composant des données d'entrée selon l'algorithme byzantin.

15. Unité de calcul selon l'une quelconque des revendications 11 à 14, **caractérisée en ce qu'**elle présente un circuit logique de liaison, par lequel le microprocesseur (MP) a un accès aux données de procédé coordonné par l'unité logique (BSL).

16. Bloc tolérant aux pannes d'au moins 3F+1 unités logiques (BSL) de conception identique selon l'une quelconque des revendications 1 à 10 ou de 3F+1 unités de calcul (RE) selon l'une quelconque des revendications 11 à 15, dans lequel les entrées et les sorties des unités logiques (BSL) ou des unités de calcul (RE) sont raccordées l'une à l'autre de sorte que des registres correspondants (SR1 à SR10) de diverses unités logiques (BSL) ou de diverses unités de calcul (RE) présentent des données (d+i/RE+j) d'identification relative identique de l'origine (d+i) et de l'unité de calcul émettrice (RE+j).

17. Bloc tolérant aux pannes selon la revendication 16, **caractérisé en ce que** l'identification relative se fait par un mode de comptage modulo (3F+1) cyclique, en particulier croissant de manière cyclique.

18. Bloc tolérant aux pannes selon la revendication 16 ou 17, **caractérisé en ce que** les unités logiques (BSL) ou les unités de calcul (RE) peuvent être synchronisées sur l'échange de données qui a lieu entre les unités logiques (BSL) ou les unités de calcul (RE).

19. Procédé d'exploitation d'un bloc tolérant aux pannes selon l'une quelconque des revendications 16 à 18 avec au moins 3F+1 unités logiques selon l'une quelconque des revendications 1 à 10 ou unités de calcul (RE) selon l'une quelconque des revendications 11 à 15, F étant le nombre de pannes à tolérer simultanément, avec F+1 cycles de distribution de données, **caractérisé en ce que** des données introduites lors de l'introduction et de la distribution de données sont **caractérisées par** une identification relative de position invariable, l'identification relative de position invariable des données étant identique dans des registres correspondants (SR1 à SR10) des diverses unités logiques (BSL) ou des unités de calcul (RE).

20. Procédé selon la revendication 19, **caractérisé en ce que** l'identification relative de position invariable s'effectue par comptage modulo (3F+1) cyclique, en particulier croissant de manière cyclique.
